Europäisches Patentamt

European Patent Office

Office européen des brevets

(19)

(11) Veröffentlichungsnummer: **0 203 171 B1**

## EUROPÄISCHE PATENTSCHRIFT

(12)

(45) Veröffentlichungstag der Patentschrift: **12.08.92**

(21) Anmeldenummer: **86900098.4**

(22) Anmeldetag: **28.11.85**

(86) Internationale Anmeldenummer:
**PCT/EP85/00651**

(87) Internationale Veröffentlichungsnummer:
**WO 86/03144 (05.06.86 86/12)**

Die Akte enthält technische Angaben, die nach dem Eingang der Anmeldung eingereicht wurden und die nicht in dieser Patentschrift enthalten sind.

(51) Int. Cl.5: **B05D 5/08**, C08J 7/04, G11B 5/72, H01G 1/06, H01G 13/06

(54) **FOLIE MIT ZWEI EINANDER IM WESENTLICHEN PLANPARALLEL VERLAUFENDEN OBERFLÄCHEN SOWIE VERFAHREN UND VORRICHTUNG ZU IHRER HERSTELLUNG.**

(30) Priorität: **28.11.84 DE 3443319**

(43) Veröffentlichungstag der Anmeldung:
**03.12.86 Patentblatt 86/49**

(45) Bekanntmachung des Hinweises auf die Patenterteilung:
**12.08.92 Patentblatt 92/33**

(84) Benannte Vertragsstaaten:
**AT BE CH FR GB IT LI LU NL SE**

(56) Entgegenhaltungen:
**DE-A- 3 205 004**
**DE-B- 1 251 618**

**Patent Abstracts of Japan, Band 7, Nr. 93 (P-192)(1238) 19. April 1983; & JP-A-58 19738 (Fuji Shashin Film) 4. Februar 1983**

**Verpackungs-Rundschau 7/1984, S.**

**1028-1031, "Im Blickfeld: billige Ersatz oder neue Variante ? Betrachtungen über metallisierte Verbunde"**

(73) Patentinhaber: **Schmoock, Helmuth**
**Büchener Weg 121**
**W-2058 Lauenburg/Elbe(DE)**

(72) Erfinder: **Schmoock, Helmuth**
**Büchener Weg 121**
**W-2058 Lauenburg/Elbe(DE)**

(74) Vertreter: **Heldt, Gert, Dr. Dipl.-Ing.**
**Neuer Wall 59 III**
**W-2000 Hamburg 36(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 203 171 B1

## Beschreibung

Die Erfindung betrifft eine Verpackungsfolie mit zwei einander im wesentlichen planparallelen Oberflächen, von denen mindestens eine mit einer Metallschicht versehen ist.

Derartige Verpackungsfolien werden in der modernen Verpackungstechnik sehr häufig verwendet. Sie werden u.a. beschrieben in der Verpackungs-Rundschau 7/1984. In dem dort veröffentlichten Artikel werden die Vor- und Nachteile derartiger Verpackungsfolien beschrieben. Sie sind einerseits in der Lage, die eingepackte Ware in einem besonders verkaufsgünstigen Licht erscheinen zu lassen. Insbesondere auf dem Gebiet des Lebensmittelshandels sind solche Waren bei Kunden besonders beliebt, die von einer Folie mit einer besonders hohen Oberflächenbrillanz umgeben sind.

Andererseits ist bereits versucht worden, Metallbeschichtungen gasdicht zu machen. Wie sich insbesondere aus der Verpackungs-Rundschau 7/1984 deutlich ergibt, sucht die einschlägige Fachwelt nach einer Möglichkeit, mit Hilfe der Metallisierung eine Folie gasdicht zu gestalten. Dabei hat sich herausgestellt, daß die metallisierte Oberfläche leicht zerkratzt und scheuerempfindlich ist. Bei der Weiterverarbeitung metallisierter Folien entstehen Kratzer, die dafür verantwortlich sind, daß die Gasdichtigkeit der Folie leidet. Dabei konnten Einzelheiten bisher nicht herausgefunden werden, welche Einflußfaktoren dazu führen, daß die auf die Folie aufgetragene Metallschicht mehr oder minder stark zerkratzt. Vielmehr konnte ermittelt werden, daß die Gasdichtigkeit metallisierter Folien von einem Hersteller zum anderen in erheblichem Umfange schwankt. Darüber hinaus wurde festgestellt, daß die Gasdurchlässigkeit zunimmt, wenn die metallisierte Folie in einer Kaschier-Maschine bearbeitet wird.

Die bei der Bearbeitung einer metallisierten Folie entstehenden Kratzspuren beeinflussen nicht nur die Gasdichtigkeit der Folie sondern auch deren gutes Aussehen. Darüber hinaus werden auch die mechanischen Eigneschaften der Oberfläche durch die Kratzer beeinträchtigt.

Darüber hinaus ist ein Verfahren zum Bedampfen von Kunststoff-Bändern mit einer Metallschicht bekannt (DE-AS 1251618). Diese Kunststoff-Bänder dienen vorzugsweise zur Herstellung von elektrischen Kondensatoren. Diese Kunststoff-Bänder werden nach dem Bedampfen im Vakuum aufgespult, so daß die einzelnen Lagen der entstehenden Rolle stark aufeinander gepresst werden. Als Nachteil hat sich erwiesen, daß beim nachträglichen Abspulen die aufgedampfte Metallschicht so fest an der Rückseite der auf der Metallschicht liegenden Lage haftet, daß sie von der Oberfläche abreißt, auf die sie aufgedampft wurde. Auf diese Weise entstehen starke Beschädigungen an der Metallschicht, die dazu führen, daß die metallisierte Folie zur Herstellung von Kondensatoren nicht mehr geeignet ist. Um ein derartiges Anhaften der Metallschicht an der sie beaufschlagenden Nachbarlage zu verhindern, wird eine Trennschicht aus Öl und Fett mit einem niedrigen Dampfdruck auf eine oder beide Seiten der Bänder aufgedampft, aufgedruckt oder aufgestrichen. Diese Trennschicht kann beliebig dünn hergestellt werden. Eine nicht einmal monokulare Belegung genügt. Darüber hinaus kann die Trennschicht ganzflächig oder nur in einzelnen Streifen oder auf einzelne Teile der Metallfläche aufgebracht werden. Das Trennmittel kann gleichzeitig auch als ein Gleitmittel wirken.

Eine derartige Trennschicht ist nicht geeignet, Verkratzen der Metallschicht zu verhindern. Insbesondere im Bereich der mit einem Trennmittel nicht versehenen Streifen muß damit gerechnet werden, daß die Metallschicht mangels einer vorhandenen Trennschicht aus Öl oder Fett verkratzt. Darüber hinaus können aber auch im Bereich der monokularen Belegung Verkratzungen der Metallschicht nicht mit Sicherheit ausgeschlossen werden. Der Gedanke, eine Trennschicht der angegebenen Qualifikationsmerkmale als eine Gleitschicht auszubilden, kann daher nicht dazu verwendet werden, die metallische Oberfläche einer Verpackungsfolie gegen Verkratzen zu schützen.

Aufgabe der vorliegenden Erfindung ist es daher, eine Verpackungsfolie der einleitend genannten Art so zu verbessern, daß sie eine weitgehend gleichbleibende Oberflächengüte auch dann behält, wenn sie mechanischen Beanspruchungen unterworfen wird.

Diese Aufgabe wird erfindungsgemäß dadurch gelöst, daß die metallische Oberfläche mit einem Gleitfilm bedeckt ist, der sich über die gesamte Oberfläche in einer gleichbleibenden Dicke von höchstens 0,5 $\mu$m erstreckt.

Mit Hilfe dieses Gleitfilms wird die metallische Oberfläche einer Verpackungsfolie mit einer gleitfähigen Beschichtung versehen. Diese verhindert, daß nach dem Aufdampfen des Metalls auf die Folie die Oberfläche der Metallschicht zerkratzt werden kann. Vielmehr gleitet diese Oberfläche der Metallschicht gegenüber einer ihr gegenüber liegenden Oberfläche beispielsweise einer Walze, auf der die metallische Oberfläche der Metallschicht aufliegt. Durch das Gleiten wird verhindert, daß mechanische Beschädigungen auf der Oberfläche der aufgedampften Metallschicht auftreten, wenn diese Metallschicht über die Oberfläche einer benachbarten Walze gleitet. Auf diese Weise hält der Gleitfilm nicht nur eine Vielzahl mechanischer Einflüsse von der Oberfläche ab. Er ist darüber hinaus geeignet, insbesondere bei flächiger Beaufschlagung der Oberfläche eine Schmierschicht zu bilden, auf der eine die Oberfläche beaufschlagende Belastung gleitet. Diese Belastung hält sich vielmehr mit ihrer Bewegung im Bereich der gleitenden Reibung, so daß ein Verkratzen der Oberfläche verhindert wird. Eine unmittelbare Beaufschlagung der Oberfläche entfällt, da der Gleitfilm sich über die gesamte Oberfläche mit einer gleichbleibenden Dicke erstreckt. Auf diese Weise wird verhindert, daß Kratzer auf der metallischen Oberfläche entstehen. Die Verhinderung der Kratzer führt dazu, daß die mit dem Gleitfilm beschützte Oberfläche gasdichte Eigenschaften aufweist.

Gemäß einer bevorzugten Ausführungsform der Erfindung kann der Gleitfilm aus einem Schmierstoff bestehen. Dieser Schmierstoff kann auf besonders einfache Weise auf die zu schützende Oberfläche aufgetragen werden. Dabei ist besonders daran zu denken, diesen Schmierstoff aufzudampfen oder aufzuwalzen. In jedem Falle wird der Schmierstoff mit einer gleichbleibenden Dicke auf die zu beschützende Metalloberfläche aufgetragen.

Darüber hinaus betrifft die Erfindung ein Verfahren zur Herstellung einer gasdichten Verpackungsfolie mit zwei im wesentlichen planparallelen Oberflächen, wobei auf mindestens einer der Oberfläche eine Metallschicht aufgebracht wird.

Bei einem derartigen Verfahren, das aus der Verpackungs-Rundschau 7/1984 bekannt geworden ist, wurde versucht, durch besonders schonende Behandlung der Metallschicht deren Verkratzen zu verhindern. Derartige Bemühungen waren von Hersteller zu Hersteller von unterschiedlichen Erfolgen gekrönt. Keiner der Hersteller konnte jedoch ein Verkratzen der Oberfläche völlig verhindern. Die auf diese Weise hergestellten Folien zeigten hinsichtlich ihrer Gasundurchlässigkeit stark voneinander abweichende Eigenschaften, ohne daß auch nur eine Folie als gasundurchlässig bezeichnet werden konnte.

Weitere Aufgabe der vorliegenden Erfindung ist es daher, das Verfahren der einleitend genannten Art so zu verbessern, daß Folien mit gleichbleibender Oberflächengüte hergestellt werden können.

Diese Aufgabe wird erfindungsgemäß dadurch gelöst, daß unmittelbar im Anschluß an die Aufbringung der Metallschicht und bevor diese einer Beanspruchung ausgesetzt wird ein Gleitfilm mit einer gleichbleibenden Dicke bis höchstens 0,5 $\mu$m auf die Metallschicht aufgebracht wird.

Auf diese Weise ist gewährleistet, daß die Metallschicht von dem Gleitfilm geschützt wird, noch bevor sie einer Belastung unterworfen wird. Unmittelbar nach dem Entstehen der Metallschicht besitzt diese eine besondere Oberflächenempfindlichkeit, so daß sie durch mechanische Beanspruchungen leicht beeinträchtigt werden kann. Dabei können derartige Belastungen sowohl an Umlenkwalzen als auch an Aufwickelwalzen entstehen. Unabhängig davon, welche dieser Belastungen als erste auf die Oberfläche der Metallschicht einwirkt, muß damit gerechnet werden, daß auf der Oberfläche der Metallschicht Kratzer entstehen, die nicht nur den Glanz der Metallschicht nachteilig beeinflussen sondern insbesondere auch die Gasundurchlässigkeit der Metallschicht zerstören. Durch das Aufbringen des Gleitfilms unmittelbar im Anschluß an die Aufbringung der Metallschicht gleitet die Oberfläche der Metallschicht bezüglich der Belastung, so daß die Oberfläche der Metallschicht durch mechanische Zerstörung nicht beeinträchtigt werden kann.

Die Aufbringung des Gleitfilms kann in der Weise vorgenommen werden, daß er zunächst unmittelbar auf die Metallschicht aufgebracht wird. Diese Art der Auftragung hat sich am günstigsten erwiesen.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

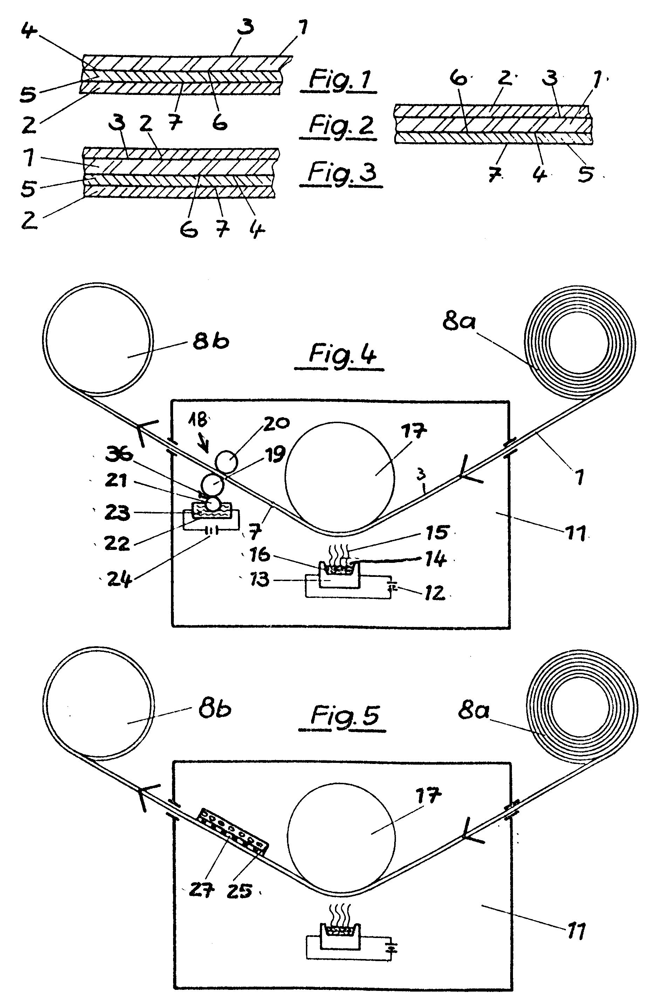

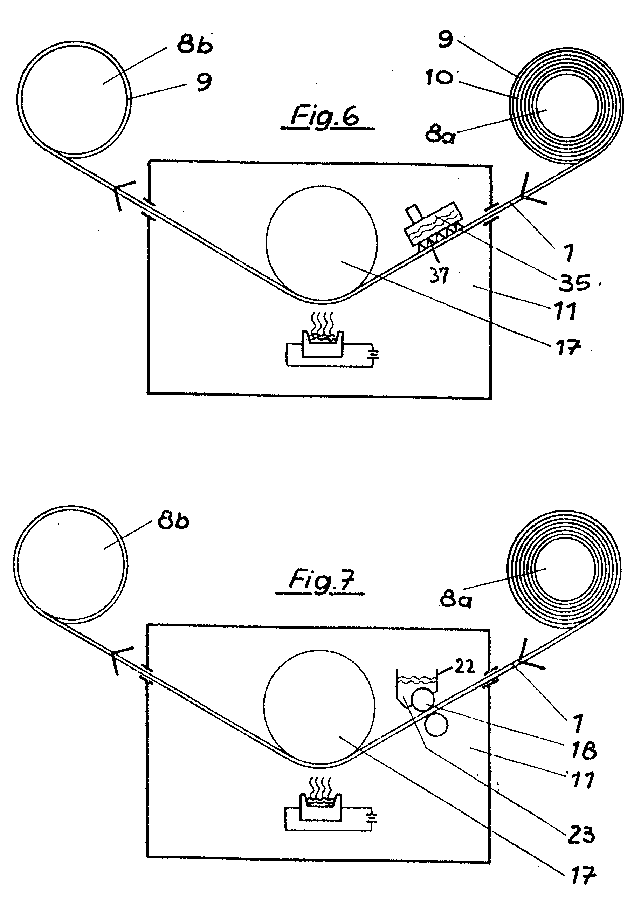

Fig. 1:     Einen Querschnitt durch eine mit einem Gleitfilm versehene Folie,

Fig. 2:     einen Querschnitt durch eine andere mit einem Gleitfilm versehene Folie,

Fig. 3:     einen Querschnitt durch eine beidseitig mit einem Gleitfilm bedampfte Folie,

Fig. 4:     eine schematische Darstellung einer Anlage zur Beschichtung einer Folie und Auftragung eines Gleitfilms,

Fig. 5:     eine schematische Darstellung einer anderen Anlage zur Beschichtung einer Folie und Aufdampfung eines Gleitfilms,

Fig. 6:     eine schematische Darstellung einer Anlage, mit der die der aufzubringenden Metallschicht abgewandte Oberfläche einer Folie mit einem Gleitfilm versehen wird und

Fig. 7:     eine schematische Darstellung einer Anlage, mit der auf die der aufzubringenden Metallschicht abgewandte Oberfläche der Folie ein Gleitfilm aufgewalzt wird.

Eine erfindungsgemäße Folie besteht im wesentlichen aus einem Trägermaterial 1, einer Metallschicht 5 und einem Gleitfilm 2. Die Metallschicht ist auf eine der beiden Oberflächen 3, 4 des Trägermaterials 1 aufgebracht. Das Trägermaterial 1 besteht aus einer Kunststoffolie. Der Gleitfilm 2 kann auf die Metallschicht 5 aufgetragen sein oder auf die der Metallschicht 5 jeweils gegenüberliegende Oberfläche 3 der Folie. Soweit der Gleitfilm 2 auf der der Metallschicht 5 abgewandten Oberfläche 3 aufgetragen wird, ist davon auszugehen, daß mindestens Teile dieses Gleitfilms 2 auf eine dem Trägermaterial 1 abgewandte Oberfläche 7 der Metallschicht 5 übertragen wird, wenn die Folie zu einer Rolle aufgewickelt wird und dabei die Metallschicht der einen Lage von der mit dem Gleitfilm 2 versehenen Oberfläche 3 der nächsten Lage beaufschlagt wird.

Die Metallschicht 5 kann als eine Aluminiumschicht ausgebildet sein, die beispielsweise auf die Oberfläche 4 des Trägermaterials 1 aufgedampft ist.Diese Metallschicht 5 hat eine mit der jeweiligen Oberfläche 3,4 des Trägermaterials1 verbundene Oberfläche 6 und eine weitere Oberfläche 7, die vom Trägermaterial 1 abgewandt ist und sich als metallische Oberfläche 7 präsentiert. Diese metallische Oberfläche 7 kann mit dem Gleitfilm 2 beschichtet sein. In diesem Falle verhindert der auf die Metallschicht 5 aufgebrachte Gleitfilm 2, daß unmittelbar auf der Metallschicht 5 eine trockene Reibung mit einem die Metallschicht 5 belastenden Gegenstand stattfindet. Dieser belastende Gegenstand kann beispielsweise bei einer zu einer Rolle 8 aufgewickelten Folie eine Lage 9 dieser Rolle 8 sein, die auf eine unter ihr sich erstreckende untere Lage 1o mechanische Kräfte so weitgehend ausübt, wie die obere Lage 9 auf die untere Lage 1o gepreßt wird. Durch dieses Verpressen der Lagen 9, 1o werden in der Folie Spannungskräfte erzeugt die dadurch entstehen, daß die Folie zu fest aufgewickelt worden ist. Durch diese feste Aufwicklung entsteht im Trägermaterial 1 eine Spannung, die sich im Verlaufe der Zeit ausgleicht und damit Bewegungen der einzelnen Lagen 9 gegenüber benachbarten Lagen 1o in einer Rolle 8 hervorruft. Durch derartige Bewegungen scheuern die Oberflächen 6, 7 benachbarter Lagen 9, 1o aufeinander, so daß mindestens auf einer dieser Oberflächen 6, 7 Kratzspuren entstehen. Diese Kratzspuren beeinträchtigen die Brillanz der Oberfläche 6, 7 und vermindern die mechanische Festigkeit der Metallschicht 5. Diese kann Risse enthalten, die sich ganz durch die Metallschicht 5 hindurcherstrecken und diese beispielsweise für Gase undicht machen.

Der Gleitfilm 2 kann nicht nur unmittelbar auf die metallische Oberfläche 7 der Metallschicht 5 aufgetragen werden. Es ist auch möglich, den Gleitfilm 2 auf die der Metallschicht 5 abgewandte Oberfläche 3 des Trägermaterials 1 aufzutragen. Schließlich ist es auch denkbar, beide Oberflächen 3, 4 des Trägermaterials 1 mit einem Gleitfilm 2 zu beschichten. Einer dieser beiden Gleitfilme 2 wird zusätzlich mit einer Metallschicht 5 versehen.

Der Gleitfilm 2 weist eine gleichbleibende Dikke über die gesamte Oberfläche 3, 4; 6, 7 der Folie auf. Diese gleichbleibende Dicke wird möglichst dünn gewählt und sollte höchstens o,5 μ betragen.

Der Gleitfilm 2 kann aus einem Wachs bestehen. Es ist jedoch auch möglich, den Gleitfilm 2 als eine Fetschicht auszubilden.

Seine die Folie nach außen begrenzende Oberfläche ist bedruckbar. Darüber hinaus können auf den Gleitfilm 2 andere Materialien kaschiert werden. Im Regelfall wird der Gleitfilm 2 physiologisch neutral sein. Eine derartige Ausbildung empfiehlt sich insbesondere, weil die Folie für die Verpackungszwecke geeignet sein soll.

Das Trägermaterial 1 kann aus einem Polypropylen hergestellt sein. Darüber hinaus ist es denkbar, Trägermaterialien 1 aus einem Polyester, einem Polyamid oder ein Polystyrol zu verwenden.

Der Gleitfilm 2 weist gute Gleiteigenschaften auf. Insbesondere setzt er die Reibung gegenüber einer ihn abdeckenden Fläche wesentlich herab. Diese Eigenschaft bewährt sich insbesondere bei der Aufwicklung der Folie zu einer Rolle 8, in der eine Lage 9 mit Hilfe des Gleitfilms 2 gleitend auf einer unter ihr liegenden Lage 1o gelagert ist.

Um ein Abreißen des Gleitfilms 2 von der mit ihm beschichteten Oberfläche 3, 7 zu verhindern, wird er aus einem Material hergestellt, das auf seiner Unterlage gut haftet. Dieses Material ist außberdem so beschaffen, daß es sich gut auf eine Fläche überträgt, die auf den Gleitfilm 2 aufgelegt wird. Dabei bleiben jedoch so viele Anteile des Gleitfilms 2 auf der mit ihm ursprünglich beschichteten Oberfläche 3, 7, haften, daß sie ausreichen, um mit den übertragenen Anteilen des Gleitmittels einen homogenen Gleitfilm zu bilden. Er ist weicher als ein die Metallschicht 5 bildendes Material. Darüber hinaus besitzt das den Gleitfilm 2 bildende Material einen niedrigen Dampfdruck.

Zweckmäßigerweise wird der Gleitfilm 2 auf die zu schützende Oberfläche 3, 4; 6, 7 aufgedampft. Es ist jedoch auch möglich, den Gleitfilm aufzudrucken beziehungsweise aufzusprühen. Schließlich ist es denkbar, den Gleitfilm 2 gleichmäßig auf der Folie aufzuwalzen.

Der Gleitfilm 2 kann je nach seiner Lage aufgebracht werden, bevor eine Beschichtung des Trägermaterials 1 beispielsweise mit Hilfe der Metallschicht 5 erfolgt. In diesem Falle wird der Gleitfilm 2 auf eine der aufzugringenden Metallschicht 5 abgewandte Oberfläche 3 des Trägermaterials 1 aufgebracht. Von dieser überträgt sich der Gleitfilm mindestens partiell auf die noch aufzugringende Metallschicht 5, wenn der auf die Oberfläche 3 des Trägermaterials 1 aufgebrachte Gleitfilm 2 die Metallschicht 5 beaufschlagt, beispielsweise beim Aufwickeln der Folie auf eine Rolle. Die in Förderrichtung des Trägermaterials 1 vor dessen Metallisierung erfolgende Beschichtung mit einem Gleitfilm kann innerhalb einer Bedampfungsstation 11 erfolgen, in der die Metallschicht 5 aufgebracht wird. Es ist jedoch auch möglich, den Gleitfilm 2 an freier Atmosphäre außerhalb der Bedampfungsstation 11 aufzugbringen.

Darüber hinaus ist es möglich, den Gleitfilm 2 auf die Oberfläche 7 der Metallschicht 5 aufzutragen. Diese Auftragung erfolgt in jedem Falle innerhalb der Bedampfungsstation 11, bevor die in der Bedampfungsstation 11 aufgebrachte Metallschicht 5 beispielsweise bei der Umlenkung an einer Walze einer mechanischen Beanspruchung unterworfen wird. Schließlich ist es denkbar, das Trägermaterial 1 auch innerhalb der Bedampfungsstation 11 auf die der Metallschicht 5 abgewandte Oberfläche 3 des Trägermaterials 1 aufzubringen. In diesem Falle überträgt sich der Gleitfilm 2 mindestens partiell auf die Metallschicht 5, wenn die Folie zu einer Rolle aufgewickelt wird. Dieses Aufwickeln der Folie muß allerdings in der Form stattfinden, daß die Metallschicht 5 mit ihrer metallischen Oberfläche 7 einer mechanischen Beanspruchung beispielsweise von einer Umlenkwalze nicht unterworfen wird, bevor Anteile des Gleitmittels von dem Gleitfilm 2 auf die metallische Oberfläche 7 der Metallschicht 5 übertragen worden ist.

Im Regelfall wird die Metallschicht 5 aufgedampft. Es ist jedoch auch denkbar, eine Metallschicht 5 in anderer Weise, beispielsweise durch Aufkleben einer zuvor von einer Unterlage abgelösten Metallschicht herzustellen. Auch dünne Metallfolien können auf den Gleitfilm 2 aufgeklebt wird. Zweckmäßigerweise wird die Metallschicht 5 hergestellt und unmittelbar im Anschluß daran mit dem Gleitfilm 2 überdeckt. Auf diese Weise wird verhindert, daß die neu entstandene Metallschicht 5 mechanisch beansprucht wird, bevor der Gleitfilm 2 aufgebracht worden ist. Dabei erfolgt die Aufbringung des Gleit films 2 auf die Metallschicht 5, bevor die Folie auf ihrer metallischen Oberfläche 7 von einer Walze umgelenkt wird.

Bei einer Vorrichtung zur Herstellung der Folie wird das Trägermaterial 1 von einer Vorratsrolle 8 a abgewickelt. Es wandert zu einer Bedampfungsstation 11, die im wesentlichen aus einem von einer elektrischen Spannungsquelle 12 beheizten Verdampfer 13 besteht.In diesem Verdampfer 13 ist eine Mulde 14 vorgesehen, in der ein Metalldämpfe 15 bildendes Metall 16 verdampft. Die Metalldämpfe 15 steigen in Richtung auf das von einer Umlenkrolle 17 umgelenkte Trägermaterial 1 auf und werden auf diesem in Form einer Metallschicht 5 niedergeschlagen.

Das mit dieser Metallschicht 5 beschichtete Trägermaterial wird zu einer Aufwickelrolle 8 b transportiert. Es läuft dabei durch eine Auftragstation 18, die aus einer Auftragrolle 19 besteht, daren Aufnehmerrolle 24 in ein Gleitmaterialbecken 22 hineinragt. Dieses Gleitmaterialbecken 22 wird von einer elektrischen Stromquelle 24 Geheist sind ist mit Gleitmaterial 23 gefüllt. Das Gleitmaterial 23 wird von der Aufnehmerrolle 21 aufgenommen, gegebenenfalls von einem Rakel 36 abgestreift und auf die zu beschichtende Oberfläche 7 der Metallschicht 5 übertragen, die in der Bedampfungsstation 11 hergestellt worden ist. Die auf diese Weise mit einem Gleitfilm 2 beschichtete Folie wird auf die Aufwickelrolle 8 b aufgewickelt. Dabei kann die Dicke des Gleitfilms 2 auf mehrere Weise festgelegt werden, beispielsweise dadurch, daß der Druck zwischen der Auftragsrolle 19 und der Gegendruckrolle 2o entsprechend einer vorgegebenen Dicke des Gleitfilms 2 eingestellt wird. Außerdem kann die Vorschubgeschwindigkeit des Trägermaterials 1 so eingestellt werden, daß der Gleitfilm 2 in einer gewünschten Dicke von der Auftragsrolle 19 auf der zu beschichtenden Oberfläche 3, 7 abgelagert wird.

Der Gleitfilm kann auch mit einem Bedampfungsvorgang auf die Metallschicht 5 bzw. das Trägermaterial 1 aufgefahren werden. Dieser Bedampfungsvorgang findet statt in einer Bedampfungsstation 25. In dieser Bedampfungsstation 25 wird das Gleitmaterial verdampft und über eine Düsenanordnung 27 auf die zu beschichtende Oberfläche 3, 7 übertragen.

Darüber hinaus ist es auch denkbar, das Gleitmaterial 23 in einer Besprühungsstation 35 auf das Trägermaterial 1 aufzusprühen. Dabei wird das Gleitmaterial 23 unter Druck gesetzt und über eine Düse 37 auf die zu besprühende Oberfläche 3, 7 aufgesprüht. Diese Besprühungsstation 35 kann entweder in Förderrichtung das Trägermaterials 1 vor oder hinter der Bedampfungsstation 11 vorgesehen sein. Die vor der Bedampfungsstation 11 angebrachte Besprühungsstation 35 kann entweder innerhalb oder außerhalb der Bedampfungsstation 11 vorgesehen sein und muß mindestens die der aufzubringenden Metallschicht 5 abgewandte Oberfläche 3 des Trägermaterials 1 besprühen.

In ähnlicher Weise kann auch die Auftragstation 18 in Förderrichtung des Trägermaterials 1 vor- bzw. hinter der Bedampfungsstation 11 vorgesehen sein. Schließlich kann auch die Bedampfungsstation 25, mit der der Gleitfilm 2 aufgedampft wird, in ähnlicher Weise angeordnet sein.

Zweckmäßigerweise kann auch das Gleichmaterial 23 eine antistatische Wirkung haben. Als Gleitmaterial 23 kommt ein Schmierstoff in Betracht.

Die Folie ist für eine Vielzahl von Anwendungsfällen in der Verpackungstechnik sehr gut geeignet, da der Gleitfilm die zu schützende Oberfläche7 so nachhaltig schützt, daß auch bei einer Verarbeitung der Folie dieser Gleitfilm 2 seine schützende Funktion beibehält.

**Patentansprüche**

1. Verpackungsfolie mit zwei einander im wesentlichen planparallelen Oberflächen (3, 4), von denen mindestens eine mit einer Metallschicht (5) versehen ist, dadurch gekennzeichnet, daß die metallische Oberfläche (7) mit einem Gleitfilm (2) bedeckt ist, der sich über die gesamte Oberfläche (7) in einer gleichbleibenden Dick von höchstens 0,5 um erstreckt.

2. Folie nach Anspruch 1 , dadurch gekennzeichnet, daß der Gleitfilm (2) aus einem Schmierstoff besteht.

3. Folie nach Anspruch 1 und 2, dadurch gekennzeichnet, daß der Gleitfilm (2) antistatisch ist.

4. Folie nach Anspruch 1 bis 3, dadurch gekennzeichnet, daß der Gleitfilm (2) bedruckbar ist.

5. Folie nach Anspruch 1 bis 4, dadurch gekennzeichnet, daß der Gleitfilm (2) kaschierbar ist.

6. Folie nach Anspruch 1 bis 5, dadurch gekennzeichnet, daß der Gleitfilm physiologisch neutral ist.

7. Folie nach Anspruch 1 bis 6, dadurch gekennzeichnet, daß ihr Trägermaterial (1) ein Polypropylen ist.

8. Folie nach Anspruch 1 bis 6, dadurch gekennzeichnet, daß ihr Trägermaterial (1) ein Polyester ist.

9. Folie nach Anspruch 1 bis 6, dadurch gekennzeichnet, daß ihr Trägermaterial (1) ein Polyamid ist.

10. Folie nach Anspruch 1 bis 6, dadurch gekennzeichnet, daß ihr Trägermaterial (1) ein Polystyrol ist.

11. Folie nach Anspruch 1 bis 10, dadurch gekennzeichnet, daß der Gleitfilm (2) gute Gleiteigenschaften aufweist.

12. Folie nach Anspruch 1 bis 11, dadurch gekennzeichnet, daß der Gleitfilm (2) eine geringe Reibung gegenüber einer ihn abdeckenden Flache aufweist.

13. Folie nach Anspruch 1 bis 12, dadurch gekennzeichnet, daß der auf einer ersten Lage (10) einer Rolle (8)aufgebrachte Gleitfilm (2) eine geringe Reibung gegenüber einer in der Rolle (8) nachfolgenden zweiten Lage (9) aufweist, die mit ihrer Rückseite den Gleitfilm der ersten Lage (10) abdeckt.

14. Folie nach Anspruch 1 bis 13, dadurch gekennzeichnet, daß der Gleitfilm (2) auf einer von ihm bedeckten Unterlage gut haftet.

15. Folie nach Anspruch 1 bis 14, dadurch gekennzeichnet, daß ein den Gleitfilm (2) bildendes Gleitmittel eine gute Anhaftfähigkeit an einer sich auf den Gleitfilm (2) absenkenden Fläche aufweist.

16. Folie nach Anspruch 1 bis 15, dadurch gekennzeichnet, daß der Gleitfilm (2) weicher als ein die Metallschicht (5) bildendes Material ist.

17. Folie nach Anspruch 1 bis 16, dadurch gekennzeichnet, daß der Gleitfilm (2) einen niedrigen Dampfdruck aufweist.

18. Verfahren zur Herstellung einer gasdichten Verpackungsfolie mit zwei im wesentlichen planparallele Oberflächen (3, 4), wobei auf mindestens eine Oberfläche eine Metallschicht aufgebracht wird, dadurch gekennzeichnet, daß unmittelbar im Anschluß an die Aufbringung der Metallschicht (5) und bevor diese einer Beanspruchung ausgesetzt wird ein Gleitfilm mit einer gleichbleibenden Dicke bis zu höchstens $0,5\,\mu$ auf die Metallschicht aufgebracht wird.

19. Verfahren nach Anspruch 18 dadurch gekennzeichnet, daß der Gleitfilm (2) auf die Folie aufgedampft wird.

20. Verfahren nach Anspruch 18 , dadurch gekennzeichnet, daß der Gleitfilm (2) auf die Folie aufgewalzt wird.

21. Verfahren nach Anspruch 18 bis 20, dadurch gekennzeichnet, daß die Metallschicht (5) auf die Folie aufgedampft wird.

22. Verfahren nach Anspruch 18 bis 21, dadurch gekennzeichnet, daß das Metall aufgedampft und der Gleitfilm (2) unmittelbar im Anschluß daran aufgebracht wird, bevor die Folie im Anschluß daran auf eine Rolle aufgewickelt wird.

23. Verfahren nach Anspruch 18 bis 22, dadurch gekennzeichnet, daß die Aufbringung des Gleitfilms (2) innerhalb einer Bedampfungsstation (11) vorgenommen wird, in der die Metallschicht (5) auf die Folie aufgedampft wird.

24. Verfahren nach Anspruch 18 bis 23, dadurch gekennzeichnet, daß die Aufbringung des Gleitfilms (2) in Vorschubrichtung der Folie nach der Aufbringung der Metallschicht (5) vorgenommen wird.

25. Verfahren nach Anspruch 18 bis 24, dadurch gekennzeichnet, daß die Aufbringung des Gleitfilms (2) in Vorschubrichtung der Folie nach der Aufbringung der Metallschicht (5) auf die metallische Oberfläche (4) vorgenommen wird.

**Claims**

1. A packaging foil having two surfaces (3, 4) which are substantially plane-parallel relative to each other and of which at least one is provided with a metal layer (5), characterised in that the metallic surface (7) is covered with a sliding film (2) which extends over the entire surface (7) in a uniform thickness of at most 0.5 um.

2. A foil according to claim 1 characterised in that the sliding film (2) comprises a lubricant.

3. A foil according to claim 1 and claim 2 characterised in that the sliding film (2) is anti-static.

4. A foil according to claims 1 to 3 characterised in that the sliding film (2) can be printed upon.

5. A foil according to claims 1 to 4 characterised in that the sliding film is laminatable.

6. A foil according to claims 1 to 5 characterised in that the sliding film is physiologically neutral.

7. A foil according to claims 1 to 6 characterised in that its carrier material (1) is a polypropylene.

8. A foil according to claims 1 to 6 characterised in that its carrier material (1) is a polyester.

9. A foil according to claims 1 to 6 characterised in that its carrier material (1) is a polyamide.

10. A foil according to claims 1 to 6 characterised in that its carrier material (1) is a polystyrene.

11. A foil according to claims 1 to 10 characterised in that the sliding film (2) has good sliding properties.

12. A foil according to claims 1 to 11 characterised in that the sliding film (2) has a low level of friction relative to a surface covering it.

13. A foil according to claims 1 to 12 characterised in that the sliding film (2) which is applied on a first layer (10) of a roll (8) has a low level of friction relative to a second layer (9) which occurs subsequently in the roll (8) and which with its rear side covers the sliding film of the first layer (10).

14. A foil according to claims 1 to 13 characterised in that the sliding film (2) has good adhesion to a substrate which is covered thereby.

15. A foil according to claims 1 to 14 characterised in that a lubricant agent which forms the sliding film (2) has good adhesion capability to a surface which moves down on to the sliding film (2).

16. A foil according to claims 1 to 15 characterised in that the sliding film (2) is softer than a material forming the metal layer (5).

17. A foil according to claims 1 to 16 characterised in that the sliding film (2) has a low vapour pressure.

18. A process for the production of a gas-tight packaging foil having two substantially plane-parallel surfaces (3, 4), a metal layer being applied to at least one surface, characterised in that immediately following the application of the metal layer (5) and before same is subjected to a loading a sliding film of a uniform thickness of up to at most 0.5 $\mu$ is applied to the metal layer.

19. A process according to claim 18 characterised in that the sliding film (2) is applied to the foil by vapour deposition.

20. A process according to claim 18 characterised in that the sliding film (2) is applied to the foil by rolling.

21. A process according to claims 18 to 20 characterised in that the metal layer (5) is applied to the foil by vapour deposition.

22. A process according to claims 18 to 21 characterised in that the metal is applied by vapour deposition and the sliding film (2) is applied immediately thereafter, before the foil is subsequently wound on to a roll.

23. A process according to claims 18 to 22 characterised in that the operation of applying the sliding film (2) is effected within a vapour deposition station (11) in which the metal layer (5) is applied to the foil by vapour deposition.

**24.** A process according to claims 18 to 23 characterised in that the operation of applying the sliding film (2) is effected after the operation of applying the metal layer (5) in the forward feed direction of the foil.

**25.** A process according to claims 18 to 24 characterised in that the operation of applying the sliding film (2) is effected after the operation of applying the metal layer (5) to the metallic surface (4) in the forward feed direction of the foil.

**Revendications**

**1.** Feuille d'emballage avec deux surfaces (3, 4) sensiblement parallèles l'une à l'autre, dont l'une au moins est pourvue d'une couche métallique (5), caractérisée en ce que la surface métallique (7) est recouverte d'un film lubrifiant (2) qui s'étend sur toute la surface (7) sur une épaisseur constante de 0,5 $\mu$m au maximum.

**2.** Feuille selon la revendication 1, caractérisée en ce que le film lubrifiant (2) se compose d'une substance lubrifiante.

**3.** Feuille selon les revendications 1 et 2, caractérisée en ce que le film lubrifiant (2) est antistatique.

**4.** Feuille selon les revendications 1 à 3, caractérisée en ce que le film lubrifiant (2) peut recevoir une impression.

**5.** Feuille selon les revendications 1 à 4, caractérisée en ce que le film lubrifiant (2) peut être glacé.

**6.** Feuille selon les revendications 1 à 5, caractérisée en ce que le film lubrifiant (2) est physiologiquement neutre.

**7.** Feuille selon les revendications 1 à 6, caractérisée en ce que son matériau porteur (1) est un polypropylène.

**8.** Feuille selon les revendications 1 à 6, caractérisée en ce que son matériau porteur (1) est un polyester.

**9.** Feuille selon les revendications 1 à 6, caractérisée en ce que son matériau porteur (1) est une polyamide.

**10.** Feuille selon les revendications 1 à 6, caractérisée en ce que son matériau porteur (1) est un polystyrène.

**11.** Feuille selon les revendications 1 à 10, caractérisée en ce que le film lubrifiant (2) présente de bonnes propriétés de lubrification.

**12.** Feuille selon les revendications 1 à 11, caractérisée en ce que le film lubrifiant (2) présente un frottement réduit par rapport à une surface qui le recouvre.

**13.** Feuille selon les revendications 1 à 12, caractérisée en ce que le film lubrifiant (2) disposé sur une première couche (10) d'un rouleau (8) présente un frottement réduit par rapport à une seconde couche (9) suivante sur le rouleau (8), qui couvre avec son envers le film lubrifiant de la première couche (10).

**14.** Feuille selon les revendications 1 à 13, caractérisée en ce que le film lubrifiant (2) adhère bien à un support qu'il recouvre.

**15.** Feuille selon les revendications 1 à 14, caractérisée en ce qu'une substance lubrifiante formant le film lubrifiant (2) présente une bonne capacité d'adhérence à une surface s'abaissant sur le film lubrifiant (2).

**16.** Feuille selon les revendications 1 à 15, caractérisée en ce que le film lubrifiant (2) est plus mou que le matériau formant la couche métallique (5).

**17.** Feuille selon les revendications 1 à 16, caractérisée en ce que le film lubrifiant (2) présente une faible tension de vapeur.

**18.** Procédé pour la fabrication d'une feuille d'emballage étanche aux gaz avec deux surfaces (3, 4) sensiblement parallèles, dans lequel une couche métallique est appliquée sur au moins une surface, caractérisé en ce qu'immédiatement après l'application de la couche métallique (5) et avant l exposition de celle-ci à une contrainte un film lubrifiant d'une épaisseur constante allant jusqu'à 0,5 $\mu$m au maximum est appliqué sur la couche métallique.

**19.** Procédé selon la revendication 18, caractérisé en ce que le film lubrifiant (2) est déposé par vaporisation sur la feuille.

**20.** Procédé selon la revendication 18, caractérisé en ce que le film lubrifiant (2) est déposé par des rouleaux sur la feuille.

**21.** Procédé selon les revendications 18 à 20, caractérisé en ce que la couche métallique (5) est déposée par vaporisation sur la feuille.

**22.** Procédé selon les revendications 18 à 21, caractérisé en ce que le métal est déposé par vaporisation et le film lubrifiant (2) déposé immédiatement après, avant que la feuille ne soit ensuite enroulée sur un rouleau.

**23.** Procédé selon les revendications 18 à 22, caractérisé en ce que l'application du film lubrifiant (2) est réalisée dans un poste de vaporisation (11) dans lequel la couche métallique (5) est déposée par vaporisation sur la feuille.

**24.** Procédé selon les revendications 18 à 23, caractérisé en ce que l'application du film lubrifiant (2) est réalisée après l'application de la couche métallique (5) dans le sens de l'avancement de la feuille.

**25.** Procédé selon les revendications 18 à 24, caractérisé en ce que l'application du film lubrifiant (2) se fait après l'application de la couche métallique (5) sur la surface métallique (4) dans le sens de l'avancement de la feuille.

Fig. 1

Fig. 2

Fig. 3

Fig. 4

Fig. 5

_Fig.6_

_Fig.7_